(19) Europäisches Patentamt / European Patent Office / Office européen des brevets

(11) **EP 2 711 587 B1**

(12) **EUROPEAN PATENT SPECIFICATION**

(45) Date of publication and mention of the grant of the patent:
**10.02.2016 Bulletin 2016/06**

(21) Application number: **12788938.4**

(22) Date of filing: **18.05.2012**

(51) Int Cl.:
*F16G 5/20* (2006.01)       *B32B 25/02* (2006.01)
*C08K 5/20* (2006.01)       *C08L 11/00* (2006.01)
*C08L 77/10* (2006.01)       *F16G 5/06* (2006.01)

(86) International application number:
**PCT/JP2012/062872**

(87) International publication number:
**WO 2012/161141 (29.11.2012 Gazette 2012/48)**

(54) **POWER TRANSMISSION BELT**

KRAFTÜBERTRAGUNGSBAND

COURROIE DE TRANSMISSION DE FORCE MOTRICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2011   JP 2011113777**

(43) Date of publication of application:
**26.03.2014   Bulletin 2014/13**

(73) Proprietor: **Mitsuboshi Belting Ltd.**
**Kobe-shi, Hyogo 653-0024 (JP)**

(72) Inventors:
• **NISHIYAMA Takeshi**
**Hyogo 6530024 (JP)**

• **TAKABA Susumu**
**Hyogo 6530024 (JP)**

(74) Representative: **Hoffmann Eitle**
**Patent- und Rechtsanwälte PartmbB**
**Arabellastraße 30**
**81925 München (DE)**

(56) References cited:
JP-A- H1 180 422       JP-A- H05 200 905
JP-A- 2001 343 049       JP-A- 2009 008 254
JP-A- 2009 250 293       JP-A- 2009 250 293
JP-A- 2009 299 026       JP-A- 2010 230 146
US-A1- 2008 058 452

**Description**

**TECHNICAL FIELD**

The present invention relates to a power transmission belt such as V-belt and V-ribbed belt, and more specifically, relates to a power transmission belt excellent in the durability performance and transmission efficiency.

**BACKGROUND ART**

Conventionally, in order to enhance the lateral pressure resistance of a power transmission belt such as V-belt and V-ribbed belt, a short fiber is blended as a reinforcing agent in a compression rubber layer. For example, Patent Document 1 discloses a rubber V-belt which is a belt comprising an elastic adhesive layer having a cord embedded therein and an elastic holding layer (compression rubber layer) located on upper and lower sides of the elastic adhesive layer, in which the elastic holding layer contains chloroprene rubber, a reinforcing filler, a metal oxide vulcanizing agent, bismaleimide and an aramid short fiber and the aramid short fiber is oriented in the width direction of the belt. In this document, the elastic modulus in the grain direction (short fiber orientation direction) is increased by the orientation of the aramid fiber to thereby maintain the lateral pressure resistance and improve the durability.

Patent Document 2 discloses a cogged V-belt having a compression rubber layer and an extensible rubber layer and having a core wire embedded therein along the longitudinal direction, in which the rubber hardness (JIS-A) of the extensible rubber layer is from 85 to 92, the rubber hardness (JIS-A) of the compression rubber layer is from 90 to 98, and the rubber hardness of the compression rubber layer is set higher by 3 to 10 or more (JIS-A) than the rubber hardness of the extensible rubber layer; and describes incorporating carbon black and an aramid short fiber into the extensible rubber layer and the compression rubber layer.

Patent Document 3 discloses a power transmission V-belt where the rubber hardness of at least either one of extensible and compression rubber layers is set to be from 90 to 96° and the rubber hardness of an adhesive rubber layer is set to be from 83 to 89°, respectively, and an aramid short fiber is oriented in the belt width direction in the extensible and compression rubber layers. In this document, early generation of cracking or separation (delamination) of each rubber layer and a cord are prevented, whereby the lateral pressure resistance is improved and in turn, the high-load power transmission capacity is enhanced.

Meanwhile, in recent years, it is required of the power transmission belt to reduce power transmission loss of the belt and enhance the fuel saving performance so as to improve the fuel consumption efficiency, as well as the above-mentioned the lateral pressure resistance and durability. For example, in paragraph [0005] of Patent Document 3, it is indicated that when the rubber hardness of the belt is raised, the flexural rigidity becomes high and with a small pulley diameter, power transmission loss occurs. Therefore, attempts are made to provide a cog on the inner circumferential side or on both the inner circumferential side and the outer circumferential side (back surface side) of a V-belt so as to reduce the flexural rigidity of the belt and thereby suppress the power transmission loss. As this kind of belt, a cogged V-belt is generally known.

With respect to the improvement of lateral pressure resistance and durability, as described in Patent Documents 1 to 3, it is an effective measure to increase the amount of a high-modulus short fiber such as aramid fiber or a reinforcing agent such as carbon black and thereby raise the rubber hardness. However, when the rubber hardness is raised, this leads to an increase in the flexural rigidity of the belt, as a result, the bending fatigue is deteriorated or with a small pulley diameter, the power transmission loss of the belt is increased to deteriorate the fuel saving performance. On the other hand, when the rubber hardness is lowered so as to improve the bending fatigue and fuel saving performance, the lateral pressure resistance is reduced and the belt life may expire early. That is, a series of characteristics of lateral pressure resistance and durability are in a trade-off relationship with a series of characteristics of bending fatigue and fuel saving performance. In this connection, the bending fatigue and fuel saving performance can be improved by providing a cog on the inner circumferential side or both the inner circumferential side and the outer circumferential side of a V-belt, but since the rubber strength is raised so as to maintain the lateral pressure resistance and durability, the fuel saving performance is not yet satisfied at present. Accordingly, a preferred rubber composition (particularly, a rubber composition of the compression rubber layer) is demanded.

Incidentally, this kind of V-belt includes a variable speed belt used for a continuously variable transmission. In this variable speed belt, the belt moves up and down (or back and force) in the pulley radial direction on the pulley so as to change the gear ratio (rotation ratio between a drive pulley and a driven pulley). If this movement is not smoothly effected, the shear force from the pulley strongly acts to cause separation between the rubber layers (adhesive rubber layer and compression rubber layer) or between the adhesive rubber layer and the core wire, and the fuel saving performance (not only fuel saving performance attributable to flexural rigidity but also fuel saving performance based on reduction in the sliding property) deteriorates. In this connection, the friction coefficient can be reduced by blending a large amount of a short fiber or a reinforcing agent such as carbon black to thereby raise the rubber hardness or by protruding a short fiber from the friction transmission surface, but when a large amount of a reinforcing agent is blended, the above-described problem arises.

JP 2009 008254 discloses a power transmission belt and its manufacturing according to the preamble of claim 1. JP H 05 200905 discloses a composition according to the preamble of claim 8.

**RELATED ART DOCUMENTS**

PATENT LITERATURE

Patent Document 1: JP-B-5-63656
Patent Document 2: JP-A-2009-150538
Patent Document 3: JP-A-10-238596

**SUMMARY OF THE INVENTION**

PROBLEMS TO BE SOLVED BY THE INVENTION

Accordingly, an object of the present invention is to provide a power transmission belt capable of reducing power transmission loss.

Another object of the present invention is to provide a power transmission belt capable of maintaining the lateral pressure resistance and durability and at the same time, improving the bending fatigue and fuel saving performance (both flexural rigidity and sliding property) even without excessively raising the rubber hardness.

MEANS FOR SOLVING THE PROBLEMS

As a result of intensive studies to attain the above-described objects, the present inventors have found that when a compression rubber layer of a power transmission belt is formed of a rubber composition containing a rubber component, a fatty acid amide and a short fiber, the fatty acid amide not only enhances the dispersibility and orientation of the short fiber but also improves the adherence of the rubber component to the short fiber and the fatty acid amide blooms (precipitates) or bleeds-out to the surface (the friction transmission surface coming into contact with a pulley) of the compression rubber layer to reduce the friction coefficient on the rubber layer surface and enhance the power transmission property (transmission efficiency), and they accomplished the present invention.

That is, the power transmission belt according to the present invention comprises an adhesive rubber layer having a core wire embedded therein in the longitudinal direction of the belt, a compression rubber layer formed on one surface of the adhesive rubber layer, and an extensible rubber layer formed on another surface of said adhesive rubber layer. In the power transmission belt having such a structure, at least the compression rubber layer contains a fatty acid amide and a short fiber.

In such a power transmission belt, the fatty acid amide acts as a dispersant for the short fiber, so that the short fiber dispersibility and the short fiber orientation (in the direction parallel to the belt width direction) in a rubber composition can be improved and the lateral pressure resistance and wear resistance of the compression rubber layer can be enhanced. Also, thanks to the fatty acid amide, adhesiveness of the short fiber to a rubber composition (matrix rubber: a rubber composition excluding a short fiber) constituting the compression rubber layer can be enhanced. In particular, in the case where an adhesion-treated short fiber is used, the adhesive component on the surface thereof (outer layer) chemically interacts with the fatty acid amide, whereby the adhesiveness of the short fiber to a rubber composition (matrix rubber) constituting the compression rubber layer can be raised. In turn, a compression rubber layer excellent in the modulus, tensile strength and tear strength can be formed. Furthermore, the fatty acid amide acts as an internal lubricant to reduce the modulus of the matrix rubber (or making flexible) but when used in combination with the short fiber, can prevent reduction of the modulus. That is, in the case where a fatty acid amide and a short fiber are used in combination, the matrix component of the compression rubber layer can be made flexible and at the same time, a compression rubber layer excellent in the mechanical characteristics can be formed, so that the bending fatigue and fuel saving performance of the belt can be improved without raising the hardness of the compression rubber layer. In addition, the fatty acid amide blooms (precipitates) or bleeds-out to the surface (the friction transmission surface coming into contact with a pulley) of the compression rubber layer and acts as an external lubricant to reduce the friction coefficient on the rubber layer surface and facilitate the friction between the rubber layer surface and a pulley, as a result, the durability and fuel saving performance of the belt (particularly, the fuel saving performance of a variable speed belt) are enhanced. Accordingly, in the present invention, the characteristics of lateral pressure resistance and durability and the characteristics of bending fatigue and fuel saving performance can be satisfied at the same time.

The fatty acid amide may contain at least one member selected from a saturated or unsaturated long-chain fatty acid amide and a saturated or unsaturated long-chain fatty acid ester amide. Also, the short fiber preferably contains at least an adhesion-treated short fiber, and the short fiber may contain at least an aramid fiber. More specifically, the rubber component of the compression rubber layer may contain chloroprene rubber, the fatty acid amide may contain at least a saturated or unsaturated fatty acid monoamide having a carbon number of 10 to 26, and an adhesive component containing at least an initial condensate of resorcin and formalin and a latex may be attached to the short fiber (e.g., at least to a part of the periphery (outer layer or surface) of the short fiber). Furthermore, an adhesive component containing a styrene-butadiene-vinylpyridine terpolymer may be attached to the short fiber.

The amounts of the fatty acid amide and short fiber used can be selected in the range where the friction coefficient on the surface of the compression rubber layer can be appropriately reduced while enhancing the mechanical characteristics of the layer and at the same time, the bending stress can be reduced without excessively raising the hardness of the compression rubber layer, thereby making it possible to improve the bending fatigue and fuel saving performance. In the rubber composition constituting the compression rubber layer, the ratio of the fatty acid amide may be, for example, approximately from 0.5 to 10 parts by mass per 100 parts by mass of the raw material rubber component, and the ratio of the short fiber may be, for example, approximately from 10 to 40 parts by mass per 100 parts by mass of the raw material rubber component.

The present invention includes a rubber composition for forming at least one rubber layer selected from a compression rubber layer and an extensible rubber layer of a power transmission belt, which the rubber composition comprises a rubber component, a fatty acid amide and a short fiber. In this composition, the short fiber preferably contains at least an adhesion-treated short fiber. The present invention also includes a method for reducing power transmission loss (a method for enhancing a power transmission property or a transmission efficiency) by forming a compression rubber layer of a power transmission belt from the above-described rubber composition.

ADVANTAGE OF THE INVENTION

In the present invention, the compression rubber layer contains a fatty acid amide and a short fiber, so that the power transmission loss by the power transmission belt can be reduced and the transmission efficiency can be enhanced. Also, even without excessively raising the rubber hardness, the lateral pressure resistance and durability can be maintained and at the same time, the bending fatigue and fuel saving performance (both flexural rigidity and sliding property) can be improved. In particular, the conflicting characteristics, that is, the characteristics of lateral pressure resistance and durability and the characteristics of bending fatigue and fuel saving performance, can be satisfied at the same time.

**BRIEF DESCRIPTION OF THE DRAWINGS**

[Fig. 1] Fig. 1 is a schematic cross-sectional view illustrating one example of the power transmission belt.
[Fig. 2] Fig. 2 is a schematic view for explaining the measuring method of the transmission efficiency.
[Fig. 3] Fig. 3 is a schematic view for explaining the measuring method of the bending stress in Examples.
[Fig. 4] Fig. 4 is a schematic view for explaining the measuring method of the friction coefficient in Examples.
[Fig. 5] Fig. 5 is a schematic view for explaining the high-load running test in Examples.
[Fig. 6] Fig. 6 is a schematic view for explaining the high-speed running test in Examples.
[Fig. 7] Fig. 7 is a schematic view for explaining the durability running test in Examples.

**MODE FOR CARRYING OUT THE INVENTION**

The rubber composition of the present invention is useful for elevating the transmission efficiency and is useful for forming at least one rubber layer selected from a compression rubber layer and an extensible rubber layer (particularly, at least a compression rubber layer) of a belt. This rubber composition contains a rubber component, a fatty acid amide, and a short fiber.

(Rubber Component)

The rubber component of the rubber composition includes, for example, a vulcanizable or crosslinkable rubber, and examples thereof include a diene-based rubber (e.g., natural rubber, isoprene rubber, butadiene rubber, chloroprene rubber, styrene butadiene rubber (SBR), acrylonitrile butadiene rubber (nitrile rubber), hydrogenated nitrile rubber), an ethylene-$\alpha$-olefin elastomer, a chlorosulfonated polyethylene rubber, an alkylated chlorosulfonated polyethylene rubber, an epichlorohydrin rubber, an acrylic rubber, a silicone rubber, a urethane rubber, and a fluororubber. These rubber components may be used alone or in combination of two or more thereof.

Preferred rubber components are an ethylene-$\alpha$-olefin elastomer (an ethylene-$\alpha$-olefin-based rubber such as ethylene-propylene rubber (EPR) and ethylene-propylenediene monomer (e.g., EPDM)) and a chloroprene rubber. A particularly preferred rubber component is a chloroprene rubber. The chloroprene rubber may be a sulfur-modified type or a non-sulfur-modified type.

(Fatty Acid Amide)

The fatty acid amide is a thermally/chemically stable solid surfactant having a long-chain fatty acid group (e.g., a fatty acid group having a carbon number of approximately from 10 to 40) and an amide group in its molecule. Examples of the fatty acid amide include a saturated or unsaturated higher fatty acid monoamide such as saturated or unsaturated higher fatty acid amide such as behenamide, arachidamide, stearamide, hydroxystearamide, palmitamide, myristamide, lauramide, erucamide, oleamide and recinoleamide; a saturated or unsaturated higher fatty acid bisamide such as alkylenebis saturated or unsaturated higher fatty acid amide (e.g., a $C_{1-10}$ alkylenebis saturated or unsaturated higher fatty acid amide such as methylenebisstearamide, methylenebislauramide, methylenebishydroxystearamide, methylenebisoleamide, ethylenebisbehenamide, ethylenebisstearamide, ethylenebiscaprylamide, ethylenebiscapramide, ethylenebislauramide, isostearamide, ethylenebiserucamide, ethylenebisoleamide, tetramethylenebisstearamide, hexamethylenebisbehenamide, hexamethylenebisstearamide, hexamethylenebishydroxystearamide, and hexamethylenebisoleamide); and a bisamide of a dicarboxylic acid and a saturated or unsaturated higher amine (e.g., a bisamide produced by the reaction of a $C_{6-12}$ alkanedicarboxylic acid and a saturated or unsaturated higher amine, such as N,N'-distearyladipamide, N,N'-distearylsebacamide, N,N'-dioleyladipamide, and N,N'-dioleylsebacamide).

Also, examples of the fatty acid amide include, in addition to an aromatic bisamide (e.g., a bisamide of an aromatic diamine and a saturated or unsaturated higher fatty acid, such as xylylenebisstearamide, and a bisamide of an aromatic dicarboxylic acid and a saturated or unsaturated higher amine, such as N,N'-distearylphthalamide), a substituted amide (a higher fatty acid amide in which a saturated or unsaturated higher fatty acid residue is amide-bonded to the nitrogen atom of an amide group, such as N-lauryl lauramide, N-palmityl palmitamide, N-stearyl stearamide, N-stearyl oleamide, N-oleyl stearamide, N-stearyl erucamide, and N-stearyl hydroxystearamide), an ester amide (an ester amide in which a higher fatty acid is ester-bonded to the hydroxyl group of an alkanolamine and a higher fatty acid is amide-bonded to the amino group of the alkanolamine, such as ethanolamine dibehenate, ethanolamine distearate, ethanolamine dipalmitate, propanolamine distearate, and propanolamine dipalmitate), an alkanolamide (methylolamides such as methylol higher fatty acid monoamide, e.g., methylolstearamide, methylolbehenamide; and a N-hydroxy $C_{2-4}$ alkyl higher fatty acid monoamide such as stearic acid monoethanolamide and erucic acid monoethanolamide), and a substituted urea (a substituted urea in which a higher fatty acid is amide-bonded to the nitrogen atom of urea, such as N-butyl-N'-stearylurea, N-phenyl-N'-stearylurea, N-stearyl-N'-stearylurea, xylylenebisstearylurea, toluylenebisstearylurea, hexamethylenebisstearylurea, and diphenylmethanebisstearylurea). The fatty acid amide preferably contains at least one member selected from a saturated or unsaturated long-chain fatty acid amide and a saturated or unsaturated long-chain fatty acid ester amide. Incidentally, in such a fatty acid amide, the carbon number of the higher fatty acid and higher amine may be approximately from 10 to 34 (e.g., from 10 to 30, preferably 10 to 28, more preferably from 10 to 26, and still more preferably from 12 to 24). These fatty acid amides may be used alone or in combination two or more thereof.

The melting point of the fatty acid amide may be selected in a range of approximately from 50 to 200°C and usually, may be approximately from 65 to 150°C, preferably from 75 to 130°C (e.g., from 80 to 120°C), and more preferably from 90 to 110°C (e.g., from 95 to 105°C).

The fatty acid amide functions as a dispersant for the short fiber and has an advantage of enhancing the dispersibility and orientation (orientation in the belt width direction) of the short fiber in the rubber composition and increasing the lateral pressure resistance and wear resistance of the compression rubber layer. In addition to the function as a dispersant, the fatty acid amide functions also as an internal lubricant in the rubber composition and tends to decrease the modulus of the matrix rubber component and make the matrix component flexible, but by the combination with a short fiber, reduction in the modulus can be suppressed. That is, thanks to the combination of a fatty acid amide and a short fiber, not only the matrix component of the compression rubber layer is made flexible but also a compression rubber layer excellent in the mechanical characteristics can be formed. In particular, the combination of a fatty acid amide and a short fiber can eliminate the need for raising the hardness of the compression rubber layer by blending a large amount of a short fiber or a reinforcing agent such as carbon black and enables improving the bending fatigue and fuel saving performance of the belt (in particular, the fuel saving performance in the case where the belt is wound around a small pulley and caused to run).

Furthermore, the fatty acid amide blooms (precipitates) or bleeds-out to the surface (the friction transmission surface coming into contact with a pulley) from the inside of the compression rubber layer and functions as an external lubricant to reduce the friction coefficient on the rubber layer surface. Moreover, the fatty acid amide blooms or bleeds-out to the surface of the compression rubber layer over a long duration, so that a low friction coefficient can be maintained over a long period of time. In turn, the rubber layer surface smoothly makes friction with a pulley, as a result, the rubber layer can be prevented from being subjected to the action of an excessive shear force by a pulley during belt running and the durability of the belt can be enhanced. Also, in use as a variable speed belt where the belt moves up and down in the pulley radial direction on the pulley, the fuel saving performance can be more effectively enhanced. Incidentally, if the friction coefficient is high, the shear force received from a pulley is increased and separation or cracking is generated due to large deformation or the like of the compression rubber layer, leading to a short life of the belt. In addition, for example, in the embodiment of coating a lubricant on the rubber layer surface, a friction-reducing effect of the lubricant may be exerted at the initial stage of belt running but when the belt is caused to run for a long time, the lubricant is scattered or worn off and the friction-reducing effect is lost.

Among the fatty acid amides, a fatty acid monoamide, for example, a saturated or unsaturated fatty acid monoamide having an amide group at the terminal, in which the number of carbons constituting the long-chain fatty acid residue is small, e.g., approximately from 10 to 26 (particularly from 12 to 24), is preferred as compared with an alkylene bisamide. The reason therefor is not clearly known, but it is presumed that in the case where the long-chain fatty acid residue has a long structure, that is, the carbon number is large, concentration of amide group in the molecular becomes relatively small and the chemical interaction between the amide group of a fatty acid amide and the adhesive component of a short fiber is decreased, and in the case where a long-chain fatty acid group (e.g., the total carbon number is large and exceeds 40) is present on both sides as in an alkylene bisamide, the chemical interaction between the amide group of a fatty acid amide and the adhesive component of a short fiber is decreased, giving rise to reduction in the adhesiveness of a short fiber to a rubber component. Incidentally, among the fatty acid amides, an ester amide is also preferred. In this light, the melting point or thermal characteristics of the fatty acid amide may be also relevant to the adhesiveness or the like between a short fiber and a rubber composition.

The ratio of the fatty acid amide is approximately, from 0.5 to 10 parts by mass, preferably from 1 to 8 parts by mass, more preferably from 1.5 to 7.5 parts by mass (e.g., from 2 to 7 parts by mass), and usually from 1 to 6 parts by mass, per 100 parts by mass of the rubber component. If the amount of the fatty acid amide used is too small, blooming to the rubber layer surface may be lessened and the effect of reducing the friction coefficient may be low, whereas if it is too large, an excess fatty acid amide not participating in the interaction with a short fiber (adhesion-treated short fiber) may function as an internal lubricant and the modulus (in particular, the modulus in the compression direction) of the matrix component may be greatly decreased. Incidentally, even if the amount of the fatty acid amide used is too large, a friction-reducing effect reflecting thereof is not obtained and this is economically disadvantageous.

(Short Fiber)

As for the kind of the short fiber, use can be generally made of a synthetic fiber such as polyolefin-based fiber (e.g., polyethylene fiber, polypropylene fiber), polyamide fiber (e.g., polyamide 6 fiber, polyamide 66 fiber, polyamide 46 fiber, aramid fiber), polyalkylene arylate-based fiber (e.g., a $C_{2-4}$ alkylene $C_{6-14}$ arylate-based fiber such as polyethylene terephthalate (PET) fiber and polyethylene naphthalate (PEN) fiber), vinylon fiber, polyvinyl alcohol-based fiber, and polyparaphenylenebenzobisoxazole (PBO) fiber; a natural fiber such as cotton, hemp and wool; and an inorganic fiber such as carbon fiber. These short fibers may be used alone or in combination of two or more thereof. Among these short fibers, a synthetic fiber or a natural fiber, particularly a synthetic fiber (such as polyamide fiber and polyalkylene arylate-based fiber) is more preferred, and in view of being rigid and having high strength and modulus, a short fiber containing at least an aramid fiber is preferred. The aramid short fiber also has high wear resistance. The aramid fiber is commercially available under the trade names of, for example, "Conex", "Nomex", "Kevlar", "Technora", and "Twaron".

The short fiber is preferably embedded in the compression rubber layer with orienting in the belt width direction so as to keep the belt from compressive deformation due to the pressing of a pulley. Also, by protruding a short fiber from the surface of the compression rubber layer, the friction coefficient on the surface can be decreased to suppress a noise (sound production) or reduce the wear resulting from rubbing with a pulley. The average length of the short fiber is, for example, from 1 to 20 mm, preferably from 2 to 15 mm, more preferably from 3 to 10 mm, and may be approximately from 1 to 5 mm (e.g., from 2 to 4 mm). If the average length of the short fiber is less than 1 mm, the mechanical characteristics (e.g., modulus) in the grain direction cannot be sufficiently enhanced, whereas if it exceeds 20 mm, a dispersion failure of the short fiber in the rubber composition may occur to cause cracking in the rubber and the belt may be damaged early.

The ratio of the short fiber may be selected in the range of approximately from 5 to 50 parts by mass per 100 parts by mass of the rubber component and may be usually from 10 to 40 parts by mass, preferably from 15 to 35 parts by mass, more preferably, approximately from 20 to 30 parts by mass, and still more preferably, approximately from 15 to 30 parts by mass (from 15 to 25 parts by mass). If the amount of the short fiber used is too small, the mechanical characteristics of the compression rubber layer are insufficient, whereas if it is too large, the bending fatigue of the compression rubber layer deteriorates (the compression rubber layer becomes hard and the bending stress is increased), as a result, there arises a problem that in the state of the belt winding diameter being small, the loss due to bending becomes large and the fuel saving performance is reduced. Also, if the amount of the short fiber used is too large, there arises a problem that the dispersibility of the short fiber in the rubber composition is decreased to cause a dispersion failure, and cracking starting from that portion may occur early in the compression rubber layer.

Incidentally, probably because the fatty acid amide has an amide bond and a long-chain fatty acid residue, the adhesiveness between the short fiber and the rubber composition (matrix rubber: the rubber composition excluding the short fiber) constituting the compression rubber layer can be enhanced. In particular, in the case where an adhesion-treated short fiber is used as the short fiber, the adhesive component on the surface (outer layer) thereof chemically interacts with the fatty acid amide, whereby the adhesiveness of the short fiber to the rubber composition (matrix rubber) constituting the compression rubber layer can be increased. In turn, the modulus, tensile strength and tear strength of the compression rubber layer can be more enhanced.

In view of dispersibility and adhesiveness of the short fiber in the rubber composition, at least a part of the short fiber is preferably adhesion-treated (or surface-treated). In this connection, it is not required that all short fibers are adhesion-treated, and an adhesion-treated short fiber and a non-adhesion-treated short fiber (non-treated short fiber) may be mixed or used in combination.

The adhesion treatment of the short fiber can be performed by using various adhesion treatments, for example, a treatment solution containing an initial condensate of phenols and formalin (e.g., prepolymer of novolak- or resol-type phenol resin), a treatment solution containing a rubber component (or a latex), a treatment solution containing the above-described initial condensate and a rubber component (latex), or a treatment solution containing a reactive compound (adhesive compound) such as a silane coupling agent, an epoxy compound (e.g., epoxy resin), and an isocyanate compound. In a preferred adhesion treatment, the short fiber is treated with a treatment solution containing the above-described initial condensate and a rubber component (latex), particularly at least with a resorcin-formalin-latex (RFL) solution. These treatment solutions may be used in combination and, for example, the short fiber may be pretreated with a conventional adhesive component, for example, a reactive compound (adhesive compound) such as epoxy compound (e.g., epoxy resin) and isocyanate compound, and then treated with an RFL solution.

In the case of treating with such a treatment solution, particularly with an RFL solution, the short fiber can be strongly adhered to the rubber composition. The RFL solution is a mixture of an initial condensate of resorcin and formaldehyde, and a rubber latex. The molar ratio of resorcin to formaldehyde is may be set in a range where the adhesiveness between the rubber and the short fiber can be enhanced, for example, may be set to be approximately, former/latter = from 1/0.5 to 1/3, preferably from 1/0.6 to 1/2.5, more preferably from 1/0.7 to 1/1.5, and may be approximately from 1/0.5 to 1/1 (e.g., from 1/0.6 to 1/0.8). The kind of the latex is not particularly limited and may be appropriately selected from the above-described rubber components depending on the kind of the rubber component that is the target of adhesion. For example, in the case where the rubber composition working out to the target of adhesion contains chloroprene rubber as the main component, the latex may be a diene-based rubber (e.g., natural rubber, isoprene rubber, butadiene rubber, chloroprene rubber, styrene butadiene rubber (SBR), styrene-butadiene-vinylpyridine terpolymer, acrylonitrile butadiene rubber (nitrile rubber), hydrogenated nitrile rubber), an ethylene-$\alpha$-olefin elastomer, a chlorosulfonated polyethylene rubber, or an alkylated chlorosulfonated polyethylene rubber. These latexes may be used alone or in combination of two or more thereof. The preferred latex is a diene-based rubber (e.g., styrene-butadiene-vinylpyridine terpolymer, chloroprene rubber and butadiene rubber) or a chlorosulfonated polyethylene rubber, and in view of more enhancing the adhesiveness, a styrene-butadiene-vinylpyridine terpolymer is preferred. In the case where the short fiber is adhesion-treated with a treatment solution containing at least a styrene-butadiene-vinylpyridine terpolymer (e.g., RFL solution), the adhesiveness between the rubber composition (e.g., chloroprene rubber composition) and the short fiber can be enhanced and at the same time, thanks to the combining with a fatty acid amide, the adhesiveness between the rubber composition and the short fiber can be more increased.

The ratio of the initial condensate of resorcin and formalin may be approximately from 10 to 100 parts by mass (e.g., from 12 to 50 parts by mass, and preferably from 15 to 30 parts by mass) per 100 parts by mass of the rubber portion of the latex. Incidentally, the total solid content concentration of the RFL solution can be adjusted in the range of from 5 to 40 mass%.

The adhesion rate of the adhesive component (solid content) to the short fiber is, for example, from 1 to 25 mass%, preferably from 3 to 20 mass%, more preferably from 5 to 15 mass%, and may be approximately from 3 to 10 mass% (e.g., from 4 to 8 mass%). If the adhesion rate of the adhesive component is less than 1 mass%, the dispersibility of the short fiber in the rubber composition or the adhesiveness between the short fiber and the rubber composition is insufficient, whereas if it is as high as exceeding 25 mass%, the adhesive component firmly fixes fiber filaments to each other and the dispersibility may be rather reduced.

The method for preparing the adhesion-treated short fiber is not particularly limited, and there may be utilized, for example, a method where a continuous fiber of multifilament is dipped in an adhesion treatment solution, dried and then cut into a predetermined length, and a method where an untreated short fiber is dipped in an adhesion treatment solution for a predetermined time and after removing an excess adhesion treatment solution by centrifugal separation or the like, and dried.

(Additives such as Vulcanizing Agent)

The rubber composition may contain, if desired, a vulcanizing agent or crosslinking agent (or a crosslinking agent system), a co-crosslinking agent, a vulcanization aid, a vulcanization accelerator, a vulcanization retarder, a metal oxide (e.g., zinc oxide, magnesium oxide, calcium oxide, barium oxide, iron oxide, copper oxide, titanium oxide, aluminum oxide), a reinforcing agent (e.g., carbon black, silicon oxide such as hydrous silica), a filler (e.g., clay, calcium carbonate, talc, mica), a softener (e.g., oils such as paraffin oil and naphthene-based oil), a processing agent or processing aid (e.g., stearic acid, metallic stearate, wax, paraffin), an anti-aging agent (e.g., antioxidant, anti-heat aging agent, flexural cracking inhibitor, ozone degradation inhibitor), a coloring agent, a tackifier, a plasticizer, a coupling agent (e.g., silane coupling agent), a stabilizer (e.g., ultraviolet absorber, heat stabilizer), a flame retardant, an antistatic agent, and the like. Incidentally, the metal oxide may be act as a crosslinking agent.

As the vulcanizing agent or crosslinking agent, a conventional component can be used depending on the kind of the rubber component, and examples thereof include the above-described metal oxide (e.g., magnesium oxide, zinc oxide), an organic peroxide (e.g., diacyl peroxide, peroxyester, dialkyl peroxide), and a sulfur-based vulcanizing agent. Examples of the sulfur-based vulcanizing agent include powder sulfur, precipitated sulfur, colloid sulfur, insoluble sulfur, highly dispersible sulfur, and sulfur chloride (e.g., sulfur monochloride, sulfur dichloride). These crosslinking agents or vulcanizing agents may be used alone or in combination of two or more thereof. In the case where the rubber component is chloroprene rubber, use can be made of a meal oxide (e.g., magnesium oxide, zinc oxide) as the vulcanizing agent or crosslinking agent. Incidentally, the metal oxide may be used in combination with another vulcanizing agent (e.g., sulfur-based vulcanizing agent), and the metal oxide and/or the sulfur-based vulcanizing agent may be used alone or in combination with a vulcanization accelerator.

The amount of the vulcanizing agent used may be selected in the range of approximately from 1 to 20 parts by mass per 100 parts by mass of the rubber component, depending on the kinds of the vulcanizing agent and the rubber component. For example, the amount used of the organic peroxide as a vulcanizing agent may be selected in the range of approximately, from 1 to 8 parts by mass, preferably from 1.5 to 5 parts by mass, and more preferably from 2 to 4.5 parts by mass, per 100 parts by mass of the rubber component, and the amount of the metal oxide used may be selected in the range of approximately, from 1 to 20 parts by mass, preferably from 3 to 17 parts by mass, and more preferably from 5 to 15 parts by mass (e.g., from 7 to 13 parts by mass), per 100 parts by mass of the rubber component.

The co-crosslinking agent (crosslinking aid or covulcanizing agent (co-agent)) includes a known crosslinking aid, and examples thereof include a polyfunctional (iso)cyanurate (e.g., triallyl isocyanurate (TAIC), triallyl cyanurate (TAC)), a polydiene (e.g., 1,2-polybutadiene), a metal salt of an unsaturated carboxylic acid (e.g., zinc (meth)acrylate, magnesium (meth)acrylate), oximes (e.g., quinone dioxime), guanidines (e.g., diphenylguanidine), a polyfunctional (meth)acrylate (e.g., ethylene glycol di(meth)acrylate, butane diol di(meth)acrylate, trimethylolpropane tri(meth)acrylate), and bismaleimides (e.g., an aliphatic bismaleimide such as N,N'-1,2-ethylene bismaleimide and 1,6'-bismaleimide-(2,2,4-trimethyl)cyclohexane; an arene bismaleimide or aromatic bismaleimide, such as N,N'-m-phenylene bismaleimide, 4-methyl-1,3-phenylene bismaleimide, 4,4'-diphenylmethane bismaleimide, 2,2-bis[4-(4-maleimidophenoxy)-phenyl]propane, 4,4'-diphenyl ether bismaleimide, 4,4'-diphenylsulfone bismaleimide, and 1,3-bis(3-maleimidophenoxy)benzene). These crosslinking aids may be used alone or in combination of two or more thereof. Among these crosslinking aids, bismaleimides (an arene bismaleimide or aromatic bismaleimide, such as N,N'-m-phenylene dimaleimide) are preferred. By the addition of bismaleiinides, the crosslinking degree can be raised, and sticking wear and the like can be prevented.

The ratio of the co-crosslinking agent (crosslinking aid), in terms of the solid content, may be selected in the range of, for example, approximately from 0.01 to 10 parts by mass per 100 parts by mass of the rubber component and may be approximately, from 0.1 to 5 parts by mass (e.g., from 0.3 to 4 parts by mass), and preferably from 0.5 to 3 parts by mass (e.g., 0.5 to 2 parts by mass).

Examples of the vulcanization accelerator include a thiuram-based accelerator (e.g., tetramethylthiuram monosulfide (TMTM), tetramethylthiuram disulfide (TMTD), tetraethylthiuram disulfide (TETD), tetrabutylthiuram disulfide (TBTD), dipentamethylenethiuram tetrasulfide (DPTT), N,N'-dimethyl-N,N'-diphenylthiuram disulfide), a thiazole accelerator (e.g., 2-mercaptobenzothiazole, a zinc salt of 2-mercaptobenzothiazole, 2-mercaptothiazoline, dibenzothiazyl disulfide, 2-(4'-morpholinodithio)benzothiazole), a sulfenamide-based accelerator (e.g., N-cyclohexyl-2-benzothiazyl sulfenamide (CBS), N,N'-dicyclohexyl-2-benzothiazyl sulfenamide), a bismaleimide-based accelerator (e.g., N,N'-m-phenylene bismaleimide, N,N'-1,2-ethylene bismaleimide), guanidines (e.g., diphenylguanidine, di-o-tolylguanidine), a urea-based or thiourea-based accelerator (e.g., ethylene thiourea), dithiocarbamates, and xanthates. These vulcanization accelerators may be used alone or in combination of two or more thereof. Among these vulcanization accelerators, TMTD, DPTT, CBS and the like are used for general purposes.

The ratio of the vulcanization accelerator, in terms of the solid content, may be approximately, for example, from 0.1 to 15 parts by mass, preferably from 0.3 to 10 parts by mass, and more preferably from 0.5 to 5 parts by mass, per 100 parts by mass of the rubber component.

The amount of the reinforcing agent (e.g., carbon black, silica) used may be approximately from 10 to 100 parts by mass (preferably from 20 to 80 parts by mass, and more preferably from 30 to 70 parts by mass) per 100 parts by mass of the total amount of the rubber component. Also, the amount of the softener (oils such as naphthene-based oil) used may be approximately, for example, from 1 to 30 parts by mass, and preferably from 3 to 20 parts by mass (e.g., from 5 to 10 parts by mass), per 100 parts by mass of the total amount of the rubber component. The amount of the anti-aging agent used may be approximately, for example, from 0.5 to 15 parts by mass, preferably from 1 to 10 parts by mass, and more preferably from 2.5 to 7.5 parts by mass (e.g., from 3 to 7 parts by mass), per 100 parts by mass of the total amount of the rubber component.

(Structure of Belt)

The structure of the power transmission belt is not particularly limited and may be sufficient if it is a belt having the above-described compression rubber layer capable of contacting with a pulley. The power transmission belt has, in many cases, an adhesive rubber layer having embedded therein a core wire in the longitudinal direction of the belt, and a compression rubber layer formed on one surface of the adhesive rubber layer, and may further have an extensible rubber layer formed on another surface of the adhesive rubber layer. Here, the compression rubber layer and the extensible rubber layer may be formed of the above-described rubber composition.

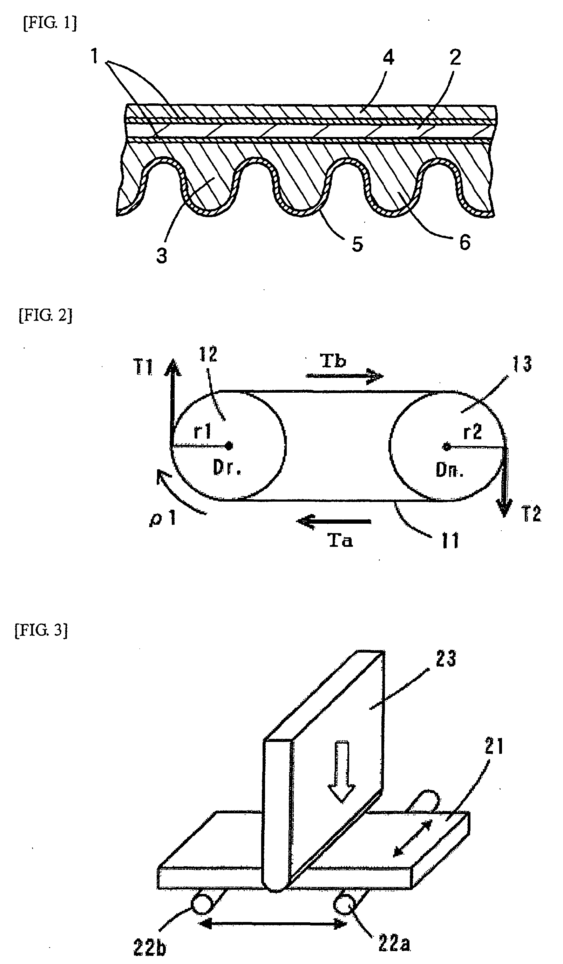

Fig. 1 is a schematic cross-sectional view illustrating one example of a power transmission belt. In this example, a core wire 2 is embedded in an adhesive rubber layer 1, a compression rubber layer 3 is stacked on one surface of the adhesive rubber layer 1, and an extensible rubber layer 4 is stacked on another surface of the adhesive rubber layer 1. Incidentally, the core wire 2 is embedded integrally in a state of being sandwiched by a pair of adhesive rubber sheets. Furthermore, a reinforcing fabric 5 is stacked on the compression rubber layer 3, and a cog part 6 is formed by a shaping die with cogs. The laminate of the compression rubber layer 3 and the reinforcing fabric 5 is integrally formed by vulcanizing a laminate of a reinforcing fabric and a compression rubber layer sheet (unvulcanized rubber sheet).

Incidentally, in the example above, an example of a cogged V-belt is illustrated, however, not limited to this structure but various belts (e.g., a raw edge belt, a V-ribbed belt) having the above-described compression rubber layer can be applied.

(Adhesive Rubber Layer)

The rubber composition for forming the adhesive rubber layer may contain, similarly to the above-described rubber composition, a rubber component (e.g., a chloroprene rubber), a vulcanizing agent or crosslinking agent (e.g., a metal oxide such as magnesium oxide and zinc oxide, a sulfur-based vulcanizing agent such as sulfur), a co-crosslinking agent or crosslinking aid (e.g., a maleimide-based crosslinking agent such as N,N'-m-phenylene dimaleimide), a vulcanization accelerator (e.g., TMTD, DPTT, CBS), a reinforcing agent (e.g., carbon black, silica), a softener (oils such as naphthene-based oil), a processing agent or processing aid (e.g., stearic acid, metallic stearate, wax, paraffin), an anti-aging agent, an adhesiveness improver (e.g., a resorcin-formaldehyde co-condensate, an amino resin (a condensate of a nitrogen-containing cyclic compound and formaldehyde, such as, a melamine resin such as hexamethylolmelamine and hexaalkoxymethylmelamine (e.g., hexamethoxymethylmelamine, hexabutoxymethylmelamine), a urea resin such as methylolurea, and a benzoguanamine resin such as methylolbenzoguanamine resin), a co-condensate thereof (e.g., a resorcin-melamine-formaldehyde co-condensate)), a filler (e.g., clay, calcium carbonate, talc, mica), a coloring agent, a tackifier, a plasticizer, a coupling agent (e.g., a silane coupling agent), a stabilizer (e.g., an ultraviolet absorber, a heat stabilizer), a flame retardant, an antistatic agent, and the like. Here, in the adhesiveness improver, the resorcin-formaldehyde co-condensate and the amino resin may be an initial condensate (prepolymer) of resorcin and/or a nitrogen-containing cyclic compound such as melamine with formaldehyde.

Incidentally, in this rubber composition, a rubber of the same system (e.g., diene-based rubber) or the same type (e.g., chloroprene) as the rubber component in the rubber composition of the compression rubber layer is used as the rubber component in many cases. Also, the amount used of each of the vulcanizing agent or crosslinking agent, the co-crosslinking agent or crosslinking aid, the vulcanization accelerator, the reinforcing agent, the softener, and the anti-aging agent may be selected from the same range as in the rubber composition of the compression rubber layer. Furthermore, in the rubber composition of the adhesive rubber layer, the amount of the processing agent or processing aid (e.g., stearic acid) used may be approximately, from 0.1 to 10 parts by mass, preferably from 0.5 to 5 parts by mass, and more preferably from 1 to 3 parts by mass, per 100 parts by mass of the rubber component. The amount of the adhesiveness improver (e.g., a resorcin-formaldehyde co-condensate, hexamethoxymethylmelamine) used may be approximately, from 0.1 to 20 parts by mass, preferably from 1 to 10 parts by mass, and more preferably from 2 to 8 parts by mass, per 100 parts by mass of the rubber component.

Examples of the fiber constituting the core wire include the same fibers as the fibers exemplified as the short fiber above. Among those fibers, in view of high modulus, a synthetic fiber such as polyester fiber containing, as the main constitutional unit, a $C_{2-4}$ alkylene arylate such as ethylene terephthalate and ethylene-2,6-naphthalate (polyalkylene arylate-based fiber) and aramid fiber, and an inorganic fiber such as carbon fiber are used for general purposes, and a polyester fiber (polyethylene terephthalate fibers, ethylene naphthalate fibers) and a polyamide fiber are preferred. The fiber may be a multifilament yarn. The fineness of the multifilament yarn may be approximately, for example, from 2,000 to 10,000 denier (in particular, from 4,000 to 8,000 denier).

As the core wire, usually, a twisted cord (e.g., ply twist, single twist, Lang's twist) using a multifilament yarn can be used. The average wire diameter of the core wire (the fiber diameter of the twisted cord) may be approximately, for example, from 0.5 to 3 mm, preferably from 0.6 to 2 mm, and more preferably from 0.7 to 1.5 mm. The core wire is embedded in the longitudinal direction of the belt, and may be embedded side by side at a predetermined pitch in parallel with the longitudinal direction of the belt.

In order to improve the adhesiveness to the rubber component, the core wire may be subjected to various adhesion treatments, similarly to the above-described short fiber, for example, to an adhesion treatment with a resorcin-formalin-latex solution (RFL solution). The adhesion treatment may be generally performed by dipping the fiber in an RFL solution and heating/drying to uniformly form an adhesive layer on the surface. Examples of the latex of the RFL solution include the same rubber components as the latex of the above-described RFL solution, and chloroprene, a styrene-butadiene-vinylpyridine terpolymer and the like are preferred. The core wire may be subjected to a pretreatment (pre-dipping) with a reactive compound such as epoxy compound and isocyanate compound before the RFL treatment or to an adhesion treatment such as gum treatment (overcoating) after the RFL treatment and then embedded in the rubber layer.

In the power transmission belt, a reinforcing fabric may be stacked on the surface of the compression rubber layer and/or the extensible rubber layer. The reinforcing fabric can be formed by staking a fabric material such as woven fabric, wide angle canvas, knitted fabric, and nonwoven fabric (preferably woven fabric) on the surface of the compression rubber layer and/or the extensible rubber layer, and, if desired, it may be subjected to the above-described adhesion treatment, for example, a treatment with an RFL solution (such as dipping treatment), or subjected to friction of rubbing an adhesive rubber into the fabric material or stacking (coating) of the adhesive rubber and the fabric material, and then stacked on the surface of the compression rubber layer and/or the extensible rubber layer.

(Transmission Efficiency)

In the case of using a power transmission belt having the above-described compression rubber layer, the transmission efficiency can be greatly enhanced. The transmission efficiency is an indicator of the transmission of rotary torque from a drive pulley to a driven pulley by a belt, and a higher transmission efficiency means that the power transmission loss of the belt is smaller and the fuel saving performance is superior. In a biaxial layout illustrated in Fig. 2 where a belt 11 is hung between two pulleys of a drive pulley (Dr.) 12 and a driven pulley (Dn.) 13, the transmission efficiency can be determined as follows.

Assuming that, in the drive pulley, the rotation speed is $\rho_1$ and the pulley radius is $r_1$, the rotary torque $T_1$ of the drive pulley can be expressed by $\rho_1 \times Te \times r_1$. Te is an effective tension obtained by subtracting the loose-side tension (the tension Tb on the side of the belt running toward the driven pulley) from the tight-side tension (the tension Ta on the side of the belt running toward the drive pulley). Similarly, assuming that, in the driven pulley, the rotation speed is $\rho_2$ and the pulley radius is $r_2$, the rotary torque $T_2$ of the driven pulley is expressed by $\rho_2 \times Te \times r_2$. Then, the transmission efficiency $T_2/T_1$ is calculated by dividing the rotary torque $T_2$ of the driven pulley by the rotary torque $T_1$ of the drive pulley and can be represented by the following equation (1):

[Equation 1]

$$T_2/T_1 = (\rho_2 \times Te \times r_2)/(\rho_1 \times Te \times r_1) = (\rho_2 \times r_2)/(\rho_1 \times r_1) \qquad (1)$$

Incidentally, the transmission efficiency does not have a value of 1 or more in practice, but a value closer to 1 indicates that the power transmission loss of the belt is smaller and the fuel saving performance is superior.

The production method of the belt is not particularly limited, and a conventional method can be employed. For example, a laminate of unvulcanized rubber layers in the above-described configuration, in which a core wire is embedded, is formed by a shaping die and vulcanized to shape a belt sleeve, and the vulcanized belt sleeve is cut into a predetermined size, whereby the belt illustrated in Fig. 1 can be formed.

EXAMPLES

The present invention is described in greater detail below based on Examples, but the present invention is not limited to these Examples.

Examples 1 to 7 and Comparative Examples 1 and 2:

(Formation of Rubber Layer)

Each of the rubber compositions shown in Table 1 (compression rubber layer, extensible rubber layer) and Table 2 (adhesive rubber layer) was prepared by performing rubber kneading by means of a known method such as Banbury mixer, and the kneaded rubber was passed through a calender roll to produce a rolled sheet (compression rubber layer sheet, extensible rubber layer sheet, adhesive rubber layer sheet). Example 1 and Example 3 are examples different in the content of the aramid short fiber, Examples 2 to 6 are examples different in the content of the fatty acid amide (from 0.5 to 10 parts by mass), and Example 7 and Example 4 are examples different in the contents of the aramid short fiber and the carbon black. Also, Comparative Example 1 is an example where in the formulation of Example 3, a stearic acid was used in place of the fatty acid amide, and Comparative Example 2 is an example where in place of the fatty acid amide of Example 7, a stearic acid in half amount was used.

In Examples and Comparative Examples, a stearamide (structural formula: $C_{18}H_{37}NO$) ("Amide AP-1", produced by Nippon Kasei Chemical Co., Ltd., melting point: 101°C) as the fatty acid amide, and an aramid short fiber (average fiber length: 3 mm, "Conex Short Fiber", produced by Teijin Techno Products Ltd.) as the short fiber, were used. Incidentally, a short fiber having an adhesion rate of 6 mass% as the solid content, which was obtained by subjecting the short fiber to an adhesion treatment with an RFL solution (containing resorcin and formaldehyde, and, as the latex, a styrene-butadiene-vinylpyridine rubber latex), was used. As the RFL solution, 2.6 parts by mass of resorcin, 1.4 parts by mass of 37% formalin, 17.2 parts by mass of a styrene-butadiene-vinylpyridine copolymer latex (produced by Zeon Corporation), and 78.8 parts by mass of water were used. Furthermore, DOS (produced by DIC Corporation) that is a sebacate-based oil was used as the plasticizer, SEAST 3 (produced by Tokai Carbon Co., Ltd.) was used as the carbon black, and NONFLEX OD3 (produced by Seiko Chemical Co., Ltd.) was used as the anti-aging agent. Also, Nipsil VN3 (produced by Tosoh Silica Corporation) was used as the silica.

[Table 1]

Table 1 (unit: parts by mass)

|  | Example | | | | | | | Comparative Example | |
|---|---|---|---|---|---|---|---|---|---|
|  | 1 | 2 | 3 | 4 | 5 | 6 | 7 | 1 | 2 |
| Chloroprene rubber | 100 | 100 | 100 | 100 | 100 | 100 | 100 | 100 | 100 |
| Aramid short fiber | 15 | 20 | 20 | 20 | 20 | 20 | 30 | 20 | 30 |
| Naphthene-based oil | 5 | 5 | 5 | 5 | 5 | 5 | 5 | 5 | 5 |
| Fatty acid amide (stearamide) | 2 | 0.5 | 2 | 4 | 6 | 10 | 4 | 0 | 0 |
| Magnesium oxide | 4 | 4 | 4 | 4 | 4 | 4 | 4 | 4 | 4 |
| Carbon black | 40 | 40 | 40 | 40 | 40 | 40 | 50 | 40 | 50 |
| Anti-aging agent | 4 | 4 | 4 | 4 | 4 | 4 | 4 | 4 | 4 |
| Zinc oxide | 5 | 5 | 5 | 5 | 5 | 5 | 5 | 5 | 5 |
| N,N'-m-Phenylene-dimaleimide | 1 | 1 | 1 | 1 | 1 | 1 | 1 | 1 | 1 |
| Stearic acid | 0 | 0 | 0 | 0 | 0 | 0 | 0 | 2 | 2 |
| Sulfur | 0.5 | 0.5 | 0.5 | 0.5 | 0.5 | 0.5 | 0.5 | 0.5 | 0.5 |
| Total | 176.5 | 180.0 | 181.5 | 183.5 | 185.5 | 189.5 | 203.5 | 181.5 | 201.5 |

[Table 2]

Table 2 (unit: parts by mass)

| | |
|---|---|
| Chloroprene rubber | 100 |
| Plasticizer | 5 |
| Magnesium oxide | 4 |
| Silica | 30 |
| Carbon black | 20 |
| Resorcin-formalin copolymer | 2 |
| Anti-aging agent | 4 |
| Zinc oxide | 5 |
| Vulcanization accelerator TMTD | 1 |
| Stearic acid | 2 |
| Hexamethoxymethylmelamine | 2 |
| Total (parts by mass) | 175 |

(Production of Belt)

A laminate of a reinforcing fabric and a compression rubber layer sheet (unvulcanized rubber) was placed on a flat die with cogs, in which tooth parts and groove parts are arranged alternately, with the reinforcing fabric facing down, and pressurized by a press at 75°C to produce a cog pad having a pattern of cogs (not completely vulcanized but in a semi-vulcanized state). Next, both ends of this cog pad were vertically cut at the top part of the cog crest part.

An internal mother die having alternately arranged therein tooth parts and groove parts was put over a cylindrical metal mold, and the cog pad was wrapped therearound to engage with these tooth parts and groove parts and joint at the top part of the cog crest part. After stacking an adhesive rubber layer sheet (unvulcanized rubber) on the cog pad wrapped, a core wire was helically spun, and another adhesive rubber layer sheet (the same as the adhesive rubber layer sheet above) and an extensible rubber layer sheet (unvulcanized rubber) were sequentially wrapped thereon to produce a shaped body. The metal mold was covered with a jacket and placed on a vulcanizing can, and vulcanization was performed at a temperature of 160°C for a time of 20 minutes to obtain a belt sleeve. This sleeve was cut in a V-shape by a cutter to obtain a belt having the structure illustrated in Fig. 1, namely, a raw edge cogged V-belt (size: top width: 22.0 mm, thickness: 11.0 mm, outer circumferential length: 800 mm) that is a variable speed belt having cogs on the inner circumferential side of the belt.

(Measurement of Physical Properties of Vulcanized Rubber)

1) Hardness, Tensile Test, Tear Test

The compression rubber layer sheet was press-vulcanized at a temperature of 160°C for a time of 20 minutes to produce a vulcanized rubber sheet (length: 100 mm, width: 100 mm, thickness: 2 mm). The hardness was measured in accordance with JIS K6253 (2006), that is, a laminate obtained by superposing three vulcanized rubber sheets on each other was used as the sample, and the hardness was measured using a type-A durometer hardness tester.

The tensile test was performed in accordance with JIS K6251 (2010), that is, a the vulcanized rubber sheet was punched out into a dumbbell shape to prepare a sample, and the stress (stress at 100% elongation) when the sample was pulled in a tensile tester and 100% elongated, and the tenacity (strength at break) and elongation (elongation at break) at the break were measured. In this measurement, the tensile test was performed on a sample where the short fiber is oriented in parallel with the tensile direction, and a sample where the short fiber is oriented perpendicularly. With respect to the sample where the short fiber is oriented in parallel, the strength at break was measured, and with respect to the sample where the short fiber was oriented perpendicularly, the stress at 100% elongation, the strength at break and the elongation at break were measured.

The tear test was performed in accordance with JIS K6252 (2007), that is, the vulcanized rubber sheet was punched into an angle shape, and the obtained sample was measured for the tensile and tear strength by a tensile tester. In this measurement, the measurement was performed in the state of the short fiber being oriented in the direction perpendicular to the tensile direction (that is, in the direction parallel with the tear direction).

2) Compression Stress

The compression rubber layer sheet was press-vulcanized at a temperature of 160°C for a time of 20 minutes to produce a vulcanized rubber shaped body (length: 25 mm, width: 25 mm, thickness: 12.5 mm). The short fiber was made orienting in the direction perpendicular to the compression surface (in the thickness direction). This vulcanized rubber shaped body was vertically sandwiched by two metal-made compression plates (the position of the top-side compression plate when the vulcanized shaped body was sandwiched without being pressed by the compression plate was defined as the initial position), the top-side compression plate was pressed against the vulcanized rubber shaped body (pressing surface: 25 mm×25 mm) at a rate of 10 mm/min to cause 20% distortion of the vulcanized rubber shaped body, and after holding this state for 1 second, the compression plate was returned upward to the initial position (preliminary compression). From the stress-strain curve measured at the fourth compression test (the conditions were the same as in the preliminary compression) after repeating the preliminary compression three times, the stress when the strain in the thickness direction of the vulcanized rubber shaped body reached 10% was measured as the compression stress. Incidentally, the preliminary compression was performed three times so as to reduce the variation in the measured data.

3) Bending Stress

The compression rubber layer sheet was press-vulcanized at a temperature of 160°C for a time of 20 minutes to produce a vulcanized rubber shaped body (length: 60 mm, width: 25 mm, thickness: 6.5 mm). The short fiber was made orienting in the direction parallel with the width of the vulcanized rubber shaped body. As illustrated in Fig. 3, this vulcanized rubber shaped body 21 was supported by placing it on a pair of rolls (diameter: 6 mm) 22a and 22b which are rotatable and kept at a distance of 20 mm, and a metal-made pressing member 23 was put in the width direction (short fiber orientation direction) at the center part on the top surface of the vulcanized rubber shaped body. The end part of the pressing member 23 had a semicircular shape of 10 mm in diameter, and the vulcanized rubber shaped body 21 can be smoothly pressed by the end part. During pressing, a frictional force acts between the bottom surface of the vulcanized rubber shaped body 21 and the rolls 22a and 22b along with compressive deformation of the vulcanized rubber shaped body 21, but since the rolls 22a and 22b are set rotatable, the effect of friction is reduced. The state where the end part of the pressing member 23 is put into contact with the top surface of the vulcanized rubber shaped body 21 but is not pressing was taken as "0", and from this state, the pressing member 23 was moved down at a rate of 100 mm/min to press against the top surface of the vulcanized rubber shaped body 21, and the stress when the strain in the thickness direction of the vulcanized rubber shaped body 21 reached 10% was measured as the bending stress.

(Measurement of Physical Properties of Belt)

1) Measurement of Friction Coefficient

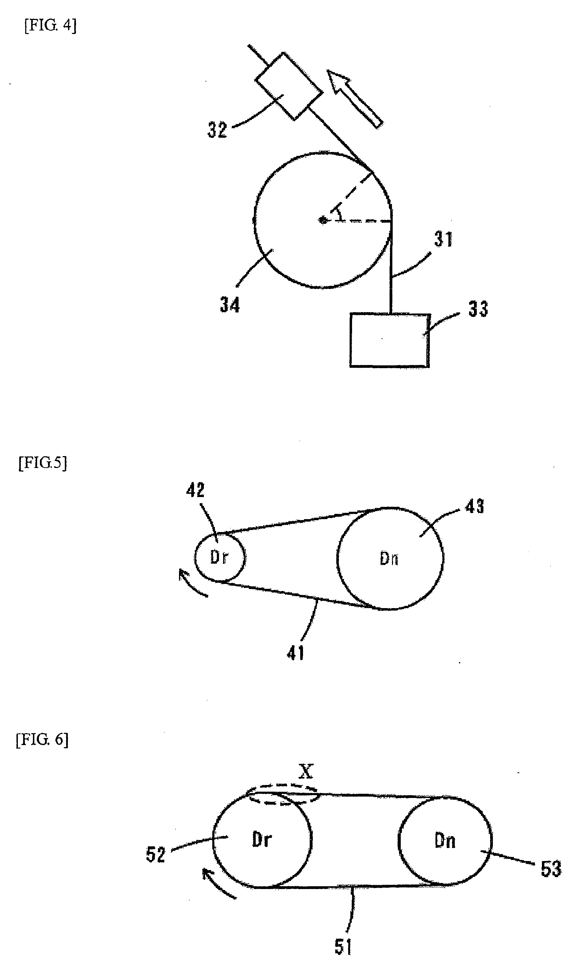

As for the friction coefficient of the belt, as illustrated in Fig. 4, one end part of a cut belt 31 was fixed to a load cell 32 , a load 33 of 3 kgf was placed on the other end part, and the belt 31 was wound around a pulley 34 by adjusting the winding angle of the belt to the pulley 34 at 45°. Thereafter, the belt 31 on the load cell 32 side was pulled at a rate of 30 mm/min for about 15 seconds, and the average friction coefficient on the friction transmission surface was measured. At the measurement, the pulley 34 was fixed to inhibit its rotating.

2) High-Load Running Test

In this running test, the transmission efficiency of the belt in the case of running in the state of the belt being greatly bent (in the state of being wound around a small pulley) was evaluated.
The high-load running test was performed, as illustrated in Fig. 5, by using a biaxial running tester consisting of a drive (Dr.) pulley 42 having a diameter of 50 mm and a driven (Dn.) pulley 43 having a diameter of 125 mm. A raw edge cogged V-belt 41 was hung between respective pulleys 42 and 43, the belt 41 was run in a room-temperature atmosphere by setting the rotation speed of the drive pulley 42 at 3,000 rpm and applying a load of 3 N· m to the driven pulley 43. Immediately after running, the rotation speed of the driven pulley 43 was read by a detector, and the transmission efficiency was determined by the above-described calculation equation. In Table 3, by taking the transmission efficiency of Comparative Example 1 as "1", the transmission efficiency of each of Examples and Comparative Example is shown by a relative value. In the case where this value is larger than 1, the transmission efficiency, that is, the fuel saving performance, of the belt 41 was judged as high.

3) High-Speed Running Test

In this running test, the transmission efficiency of the belt in the case of running in the state of the belt being slid outward on the pulley in the pulley radial direction was evaluated. In particular, when the rotation speed of the drive pulley is increased, a centrifugal force strongly acts on the belt. Also, a belt tension acts weakly at the position on the loose-side (near the region X in Fig. 6) of the drive pulley, and due to a combined action with the centrifugal force above, the belt is likely to fly out outward in the pulley radial direction at this position. If this flying out is not smoothly effected, that is, if a frictional force strongly acts between the friction transmission surface of the belt and the pulley, power transmission loss of the belt occurs due to the frictional force, and the transmission efficiency is reduced.

The high-speed running test was performed, as illustrated in Fig. 6, by using a biaxial running tester consisting of a drive (Dr.) pulley 52 having a diameter of 95 mm and a driven (Dn.) pulley 53 having a diameter of 85 mm. A raw edge cogged V-belt 51 was hung between respective pulleys 52 and 53, the belt 51 was run in a room-temperature atmosphere by setting the rotation speed of the drive pulley 52 at 5,000 rpm and applying a load of 3 N· m to the driven pulley 53. Immediately after running, the rotation speed of the driven pulley 52 was read by a detector, and the transmission efficiency was determined by the above-described calculation equation. In Table 3, by taking the transmission efficiency of Comparative Example 1 as "1", the transmission efficiency of each of Examples and Comparative Example is shown by a relative value. In the case where this value is larger than 1, the transmission efficiency, that is, the fuel saving performance was judged as high.

4) Durability Running Test

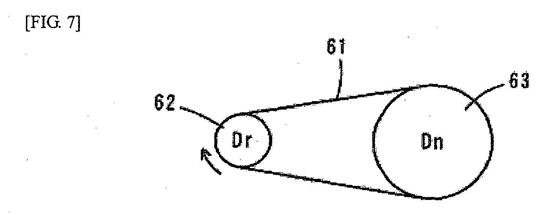

The durability running test was performed, as illustrated in Fig. 7, by using a biaxial running tester consisting of a drive (Dr.) pulley 62 having a diameter of 50 mm and a driven (Dn.) pulley 63 having a diameter of 125 mm. A raw edge cogged V-belt 61 was hung between respective pulleys 62 and 63, the belt 61 was run for maximally 60 hours at an ambient temperature of 80°C by setting the rotation speed of the drive pulley 62 at 5,000 rpm and applying a load of 10 N· m to the driven pulley 63. If the belt 61 ran for 60 hours, the durability was judged as having no problem. Also, the compression rubber-side surface (the surface coming into contact with the pulley) after running was observed with an eye, and the presence or absence of cracks was examined.

Results:

The physical properties of the vulcanized rubber and the physical properties of the belt are shown in Table 3.
[Table 3]

Table 3

| | | Example | | | | | | | Comparative Example | |
|---|---|---|---|---|---|---|---|---|---|---|
| | | 1 | 2 | 3 | 4 | 5 | 6 | 7 | 1 | 2 |
| Aramid short fiber (parts by mass) | | 15 | 20 | 20 | 20 | 20 | 20 | 30 | 20 | 30 |
| Fatty acid amide (stearamide) (parts by mass) | | 2 | 0.5 | 2 | 4 | 6 | 10 | 4 | 0 | 0 |
| Stearic acid (parts by mass) | | 0 | 0 | 0 | 0 | 0 | 0 | 0 | 2 | 2 |
| **[Physical Properties of Vulcanized Rubber]** | | | | | | | | | | |
| Hardness (°) | | 86 | 88 | 88 | 87 | 87 | 87 | 94 | 88 | 94 |
| Strength at break (MPa) | Short fiber parallel | 24.0 | 24.6 | 26.0 | 26.2 | 26.7 | 26.2 | 56.0 | 24.2 | 45.0 |

(continued)

| | | Example | | | | | | | Comparative Example | |
|---|---|---|---|---|---|---|---|---|---|---|
| | | 1 | 2 | 3 | 4 | 5 | 6 | 7 | 1 | 2 |
| Stress at 100% elongation (MPa) | Short fiber perpendicular | 9.2 | 9.4 | 10.7 | 11.0 | 11.5 | 10.8 | - | 9.0 | - |
| Strength at break (MPa) | | 12.9 | 12.4 | 12.5 | 12.0 | 12.0 | 12.2 | 15.0 | 11.5 | 11.8 |
| Elongation at break (%) | | 245 | 230 | 195 | 190 | 180 | 185 | 70 | 236 | 75 |
| Tear strength (N/mm) | Short fiber perpendicular | 69.5 | 74.0 | 77.4 | 79.0 | 80.2 | 78.5 | 102.0 | 70.0 | 85.0 |
| Compression stress (MPa) | | 1.80 | 2.00 | 1.90 | 1.85 | 1.85 | 1.85 | 3.70 | 2.00 | 3.90 |
| Bending stress (MPa) | | 3.1 | 3.5 | 3.6 | 3.6 | 3.5 | 3.4 | 5.6 | 3.5 | 5.5 |
| **[Physical Properties of Belt]** | | | | | | | | | | |
| Friction coefficient | | 0.9 | 1.0 | 0.8 | 0.7 | 0.7 | 0.7 | 0.5 | 1.3 | 0.6 |
| Transmission efficiency | High-load running | 1.09 | 1.04 | 1.07 | 1.07 | 1.07 | 1.08 | 1.01 | 1.00 | 0.93 |
| | High-speed running | 1.07 | 1.05 | 1.07 | 1.08 | 1.09 | 1.09 | 1.01 | 1.00 | 0.99 |
| High-load durability running | Durability (hrs) | 60 | 60 | 60 | 60 | 60 | 60 | 60 | 25 | 60 |
| | Presence or absence of cracks | none | none | none | none | none | none | none | none | 5 cracks |

As apparent from Table 3, in Examples, the strength at break (short fiber parallel), the stress at 100% elongation, the tear strength and the elongation at break were high, the transmission efficiency (high-load running, high-speed running) and durability were high, and the fuel saving performance was excellent, even without raising the hardness. Also, even when the hardness is high, the strength at break and tear strength were high, and the transmission efficiency (high-load running, high-speed running) and durability were high. Greater details are as follows.

1) Physical Properties of Vulcanized Rubber

From Examples 2 to 6, when the content of the fatty acid amide was increased, reduction in the hardness was slightly observed, but no significant difference was found. In Example 7 and Comparative Example 2 where the contents of short fiber and carbon black were large, the hardness was as very high as 94°. From comparison of Example 3 with Comparative Example 1, even when the fatty acid amide was changed to a stearic acid, the hardness was not varied.

From Examples 2 to 6, along with increase in the amount of the fatty acid amide, the strength at break (sort fiber parallel), the stress at 100% elongation and the tear strength tend to become higher. The reason therefor is considered to be that the fatty acid amide and the adhesive component of the short fiber chemically interacted and the adhesiveness between the short fiber and the rubber composition was enhanced. In particular, the stress at 100% elongation in the short fiber perpendicular direction where the elastic modulus of the short fiber is less likely to be reflected was increased, and this fact is considered to support the above-described interaction. Also, From comparison of Example 3 with Comparative Example 1, in the case of the fatty acid amide, all of the strength at break (short fiber parallel, perpendicular), the stress at 100% elongation and the tear strength had a high value, as compared with a stearic acid. The elongation at break tends to decrease along with increase in the blending amount of a fatty acid amide. The reason therefor is considered to be that the adhesiveness between the short fiber and the rubber composition was enhanced and the modulus became high.

Probably because the fatty acid amide acted as an internal lubricant and the matrix rubber became flexible, it was observed that the compression stress and the bending stress tend to decrease along with increase in the amount of the fatty acid amide. In Example 7 and Comparative Example 2 where the content of short fiber and carbon black were large, the compression stress and the bending stress were significantly increased.

2) Physical Properties of Belt

Since the fatty acid amide bloomed to the surface of the compression rubber layer, the friction coefficient tends to decrease along with increase in the amount of the fatty acid amide, but if exceeding a predetermined amount (about 4 parts by mass of Example 4), no great difference was found in the friction coefficient.

In Examples 1 to 6, the transmission efficiency (high-load running, high-speed running) was high and the fuel saving performance was excellent, as compared with Comparative Example 1. Also, as the blending amount of the fatty acid amide is larger, the transmission efficiency is higher.

In both of Example 7 and Comparative Example 2 where the contents of short fiber and carbon black were large, a very high bending stress was exhibited, but in Comparative Example 2, the transmission efficiency was lowest, whereas in Example 7, high transmission efficiency was exhibited.

In Examples 1 to 7, probably because the fatty acid amide bloomed to the surface of the compression rubber layer, the high-speed running property was enhanced, the flying out of the belt outward in the pulley radial direction was smoothly effected, and the power transmission loss of the belt was reduced.

As for the durability running, in Examples 1 to 7, after running for 60 hours, no crack was generated in the compression rubber layer, indicating high durability. On the other hand, in Comparative Example 1, separation occurred between the compression rubber layer and the adhesive rubber layer and the life expired in 25 hours; and in Comparative Example 2, after running for 60 hours, because of large contents of short fiber and carbon black, the hardness was high and the tear strength was low, as a result, a crack was generated in the compression rubber layer.

Example 8 and Comparative Example 3:

In order to study the relationship among the fatty acid amide, the stearic acid and the kind of short fiber, physical properties of the vulcanized rubber were evaluated. An untreated denim product (short fiber having a length of about 6 mm) was subjected to a dipping treatment in an RFL solution used in the above-described Example 1 for 10 minutes (the latex was a styrene-butadiene-vinylpyridine terpolymer) and after removing an excess RFL solution by centrifugal separation, dried in a dry oven under the conditions of 160°C for 1 hour to produce a treated denim product. The adhesion rate of an RFL component in the treated denim product obtained was 13 mass%.

A rolled rubber sheet was produced in the same manner as in Example 3 by using the treated denim product (hereinafter, treated denim) above and at the same time, using a fatty acid amide in Example 8 or using a stearic acid in place of a fatty acid amide in Comparative Example 3. This rolled rubber sheet was press-vulcanized at a temperature of 160°C for a time of 20 minutes to produce a vulcanized rubber sheet (length: 100 mm, width: 100 mm, thickness: 2 mm).

As physical properties of the vulcanized rubber, the hardness, the stress at 100% elongation, the strength at break, the elongation at break, and the tear strength were measured in the same manner as above. The results are shown in Table 4.

[Table 4]

Table 4

|  |  | Example 8 | Comparative Example 3 |
|---|---|---|---|
| Treated denim (parts by mass) | | 20 | 20 |
| Fatty acid amide (stearamide) (parts by mass) | | 2 | 0 |
| Stearic acid (parts by mass) | | 0 | 2 |
| Hardness (°) | | 84 | 84 |
| Strength at break (MPa) | Short fiber parallel | 16.1 | 15.8 |
| Stress at 100% elongation (MPa) | Short fiber perpendicular | 9.9 | 9.2 |
| Strength at break (MPa) | | 13.1 | 11.6 |
| Elongation at break (%) | | 238 | 250 |
| Tear strength (N/mm) | Short fiber perpendicular | 71.3 | 67.0 |

From the Table, in the case of using a treated denim (Example 8), all of the strength at break in the short fiber parallel direction and the stress at 100% elongation, strength at break and tear strength in the short fiber perpendicular direction had a high value, and the elongation at break was reduced. Also, as compared with a stearic acid (Comparative Example 3), in the case of using a fatty acid amide (Example 8), all of the strength at break in the short fiber parallel direction and the stress at 100% elongation, strength at break and tear strength in the short fiber perpendicular direction had a high value, and the elongation at break was low. Such a tendency was confirmed also in the case of an aramid short fiber above (comparison of Example 3 with Comparative Example 1), and it was revealed that the fiber species is irrelevant.

Examples 9 and 10:

Vulcanized rubber sheets were produced in the same manner as in Example 3 except for using, as fatty acid amides, a bisamide (ethylenebisoleamide (structural formula: $C_{38}H_{72}N_2O_2$), "SLIPACKS O", produced by Nippon Kasei Chemical Co., Ltd., melting point: 119°C) and an ester amide (ethanolamine distearate, "SLIAID S", produced by Nippon Kasei Chemical Co., Ltd., melting point: 100°C). The measurement results of physical properties of vulcanized rubber are shown in Table 5. Incidentally, the data of Example 3 and Comparative Example 1 are shown together for reference.
[Table 5]

Table 5

| | | Example | | | Comparative Example 1 |
|---|---|---|---|---|---|
| | | 3 | 9 | 10 | |
| Aramid short fiber (parts by mass) | | 20 | 20 | 20 | 20 |
| Fatty acid amide (stearamide) (parts by mass) | | 2 | 0 | 0 | 0 |
| Fatty acid bisamide (ethylenebisoleamide) (parts by mass) | | 0 | 2 | 0 | 0 |
| Fatty acid ester amide (ethanolamine distearate) (parts by mass) | | 0 | 0 | 2 | 0 |
| Stearic acid (parts by mass) | | 0 | 0 | 0 | 2 |
| Hardness (°) | | 88 | 87 | 87 | 88 |
| Strength at break (MPa) | Short fiber parallel | 26.0 | 24.5 | 26.5 | 24.2 |
| Stress at 100% elongation (MPa) | Short fiber perpendicular | 10.7 | 9.6 | 9.9 | 9.0 |
| Strength at break (MPa) | | 12.5 | 12.1 | 13.1 | 11.5 |
| Elongation at break (%) | | 195 | 205 | 218 | 236 |
| Tear Strength (N/mm) | Short fiber perpendicular | 77.4 | 83.2 | 76.8 | 70.0 |

In Examples 3, 9 and 10 using a fatty acid amide, as compared with Comparative Example 1 using a stearic acid, all of the strength at break in the short fiber parallel direction and the stress at 100% elongation, strength at break and tear strength in the short fiber perpendicular direction had a high value, and the elongation at break was reduced.
While the present invention has been described in detail and with reference to specific embodiments thereof, it will be apparent to one skilled in the art that various changes and modifications can be made therein without departing from the spirit and scope of the invention.
This application is based on Japanese Patent Application No. 2011-113777 filed on May 20, 2011, the contents of which are incorporated herein by way of reference.

**INDUSTRIAL APPLICABILITY**

The power transmission belt of the present invention can be utilized as various belts requiring reduction of the power transmission loss and is preferably for a friction transmission belt. The friction transmission belt includes, for example, a raw edge belt having a V-shaped cross-section, a raw edge cogged V-belt having cogs provided on the inner circumferential side or both the inner circumferential side and the outer circumferential side of a raw edge belt, and a V-ribbed belt. In particular, it is preferably applied to a belt (variable speed belt) used for a transmission where the gear ratio varies continuously during belt running.

**DESCRIPTION OF REFERENCE NUMERALS AND SIGNS**

1: Adhesive rubber layer
2: Core wire
3: Compression rubber layer
4: Extensible rubber layer

**Claims**

1. A power transmission belt comprising an adhesive rubber layer having a core wire embedded therein in the longitudinal direction of the belt, a compression rubber layer formed on one surface of the adhesive rubber layer, and an extensible rubber layer formed on another surface of said adhesive rubber layer, **characterised in that** at least said compression rubber layer contains a fatty acid amide and a short fiber.

2. The power transmission belt as claimed in claim 1, wherein the short fiber contains at least an adhesion-treated short fiber.

3. The power transmission belt as claimed in claim 1 or 2, wherein the fatty acid amide contains at least one member selected from a saturated or unsaturated long-chain fatty acid amide and a saturated or unsaturated long-chain fatty acid ester amide.

4. The power transmission belt as claimed in any one of claims 1 to 3, wherein the short fiber contains at least an aramid fiber.

5. The power transmission belt as claimed in any one of claims 1 to 4, wherein the rubber component of the compression rubber layer contains chloroprene rubber, the fatty acid amide contains at least a saturated or unsaturated fatty acid monoamide having a carbon number of 10 to 26 and an adhesive component containing at least a resorcin and formalin initial condensate and a latex is attached to the short fiber.

6. The power transmission belt as claimed in any one of claims 1 to 5, wherein an adhesive component containing a styrene-butadiene-vinylpyridine terpolymer is attached to the short fiber.

7. The power transmission belt as claimed in any one of claims 1 to 6, wherein the rubber composition constituting the compression rubber layer contains from 0.5 to 10 parts by mass of the fatty acid amide and from 10 to 40 parts by mass of the short fiber per 100 parts by mass of the raw material rubber component.

8. A rubber composition for forming at least one rubber layer selected from a compression rubber layer and an extensible rubber layer of a power transmission belt, **characterised in that** the rubber composition comprises a rubber component, a fatty acid amide and a short fiber.

9. The rubber composition as claimed in claim 8, wherein the short fiber contains at least an adhesion-treated short fiber.

10. A method for reducing power transmission loss by forming a compression rubber layer of a power transmission belt from the rubber composition claimed in claim 8 or 9.

**Patentansprüche**

1. Kraftübertragungsriemen, umfassend eine Adhäsiv-Kautschukschicht mit einem hierin in Längsrichtung des Riemens eingebetteten Kerndraht, eine Kompressions-Kautschukschicht, die auf einer Oberfläche der Adhäsiv-Kautschukschicht gebildet ist, und eine dehnfähige Kautschukschicht, die auf einer anderen Oberfläche der Adhäsiv-Kautschukschicht gebildet ist, **dadurch gekennzeichnet, dass** zumindest die Kompressions-Kautschukschicht ein Fettsäureamid und eine Kurzfaser enthält.

2. Kraftübertragungsriemen gemäß Anspruch 1, worin die Kurzfaser mindestens eine Adhäsions-behandelte Kurzfaser enthält.

**3.** Kraftübertragungsriemen gemäß Anspruch 1 oder 2, worin das Fettsäureamid mindestens ein Element enthält, ausgewählt aus einem gesättigten oder ungesättigten langkettigen Fettsäureamid und einem gesättigten oder ungesättigten langkettigen Fettsäureesteramid.

**4.** Kraftübertragungsriemen gemäß irgendeinem der Ansprüche 1 bis 3, worin die Kurzfaser mindestens eine Aramidfaser enthält.

**5.** Kraftübertragungsriemen gemäß irgendeinem der Ansprüche 1 bis 4, worin die Kautschukkomponente der Kompressions-Kautschukschicht einen Chloroprenkautschuk enthält, das Fettsäureamid mindestens ein gesättigtes oder ungesättigtes Fettsäure-Monoamid mit einer Kohlenstoffanzahl von 10 bis 26 enthält und eine Adhäsivkomponente mindestens ein Resorcin und Formalin-Initialkondensat enthält, und ein Latex mit der Kurzfaser verbunden ist.

**6.** Kraftübertragungsriemen gemäß irgendeinem der Ansprüche 1 bis 5, worin eine Adhäsivkomponente, die ein StyrolButadien-Vinylpyridin-Terpolymer enthält, mit der Kurzfaser verbunden ist.

**7.** Kraftübertragungsriemen gemäß irgendeinem der Ansprüche 1 bis 6, worin die Kautschukzusammensetzung, die die Kompressions-Kautschukschicht aufbaut, von 0,5 bis 10 Masseteile des Fettsäureamids und von 10 bis 40 Masseteile der Kurzfaser je 100 Masseteile der Kautschukkomponenten-Ausgangsmaterialien enthält.

**8.** Kautschukzusammensetzung zum Bilden von zumindest einer Kautschukschicht, ausgewählt aus einer Kompressions-Kautschukschicht und einer dehnbaren Kautschukschicht eines Kraftübertragungsriemens, **dadurch gekennzeichnet, dass** die Kautschukzusammensetzung eine Kautschukkomponente, ein Fettsäureamid und eine Kurzfaser umfasst.

**9.** Kautschukzusammensetzung gemäß Anspruch 8, worin die Kurzfaser mindestens eine Adhäsions-behandelte Kurzfaser enthält.

**10.** Verfahren zur Verringerung des Kraftübertragungsverlusts durch Bilden einer Kompressions-Kautschukschicht eines Kraftübertragungsriemens aus der in Anspruch 8 oder 9 beanspruchten Kautschukzusammensetzung.

## Revendications

**1.** Courroie de transmission de force motrice comprenant une couche de caoutchouc adhésive comportant un fil d'âme intégré à celle-ci dans le sens longitudinal de la courroie, une couche de caoutchouc de compression formée sur une surface de la couche de caoutchouc adhésive, et une couche de caoutchouc extensible formée sur une autre surface de ladite couche de caoutchouc adhésive, **caractérisée en ce qu'**au moins ladite couche de caoutchouc de compression contient un amide d'acide gras et une fibre courte.

**2.** Courroie de transmission de force motrice selon la revendication 1, dans laquelle la fibre courte contient au moins une fibre courte traitée par traitement d'adhérence.

**3.** Courroie de transmission de force motrice selon la revendication 1 ou 2, dans laquelle l'amide d'acide gras contient au moins un élément sélectionné parmi un amide d'acide gras à chaîne longue saturé ou non saturé et un amide d'ester d'acide gras à chaîne longue saturé ou non saturé.

**4.** Courroie de transmission de force motrice selon l'une quelconque des revendications 1 à 3, dans laquelle la fibre courte contient au moins une fibre d'aramide.

**5.** Courroie de transmission de force motrice selon l'une quelconque des revendications 1 à 4, dans laquelle le composant de caoutchouc de la couche de caoutchouc de compression contient du caoutchouc chloroprène, l'amide d'acide gras contient au moins un monoamide d'acide gras saturé ou non saturé ayant un numéro de carbone de 10 à 26 et un composant adhésif contenant au moins un condensat initial de résorcine et de formaline et un latex est attaché à la fibre courte.

**6.** Courroie de transmission de force motrice selon l'une quelconque des revendications 1 à 5, dans laquelle un composant adhésif contenant un terpolymère de styrène-butadiène-vinylpyridine est attaché à la fibre courte.

**7.** Courroie de transmission de force motrice selon l'une quelconque des revendications 1 à 6, dans laquelle la composition de caoutchouc constituant la couche de caoutchouc de compression contient de 0,5 à 10 parties en masse de l'amide d'acide gras et de 10 à 40 parties en masse de la fibre courte pour 100 parties en masse de matières premières du composant de caoutchouc.

**8.** Composition de caoutchouc pour former au moins une couche de caoutchouc sélectionnée parmi une couche de caoutchouc de compression et une couche de caoutchouc extensible d'une courroie de transmission de force motrice, **caractérisée en ce que** la composition de caoutchouc comprend un composant de caoutchouc, un amide d'acide gras et une fibre courte.

**9.** Composition de caoutchouc selon la revendication 8, dans laquelle la fibre courte comprend au moins une fibre courte traitée par traitement d'adhérence.

**10.** Procédé de réduction de perte de transmission de force motrice en formant une couche de caoutchouc de compression d'une courroie de transmission de force motrice à partir de la composition de caoutchouc revendiquée selon la revendication 8 ou 9.

[FIG. 1]

[FIG. 2]

[FIG. 3]

[FIG. 4]

[FIG.5]

[FIG. 6]

[FIG. 7]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009008254 A
- JP H05200905 B
- JP 5063656 B

- JP 2009150538 A
- JP 10238596 A
- JP 2011113777 A